# EUROPÄISCHE PATENTSCHRIFT

(11) **EP 2 349 679 B1**
(45) Veröffentlichungstag und Bekanntmachung des Hinweises auf die Patenterteilung: **22.10.2014**
(21) Anmeldenummer: 09783315.6
(22) Anmeldetag: 23.09.2009
(51) Int. Cl.: B29C 49/58

(54) **SCHNELLWECHSELBARE BLASDÜSE**
FAST REPLACEABLE BLOWING NOZZLE
TUYÈRE DE SOUFFLAGE À REMPLACEMENT RAPIDE

(30) Priorität: 07.10.2008 DE 102008050697
(43) Veröffentlichungstag der Anmeldung: 03.08.2011
(73) Patentinhaber: Krones AG, 93073 Neutraubling (DE)
(72) Erfinder: HÖLLRIEGEL, Thomas, 93158 Teublitz (DE); GEBHARDT, Maria, 92421 Schwandorf (DE)
(74) Vertreter: Bittner, Bernhard
(86) Internationale Anmeldenummer: PCT/EP2009/062309
(87) Internationale Veröffentlichungsnummer: WO 2010/040639

(56) Entgegenhaltungen:
- WO-A1-2006/095099
- DE-A1- 3 306 510
- DE-A1- 3 420 857
- DE-A1- 3 425 602
- FR-A1- 2 720 681
- US-B1- 6 238 200

## Beschreibung

Die vorliegende Erfindung bezieht sich auf eine Blaseinrichtung zum Umformen von Kunststoffvorformlingen zu Kunststoffbehältnissen. Derartige Vorrichtungen sind aus dem Stand der Technik seit langem bekannt. Dabei weisen diese Blaseinrichtungen üblicherweise eine Blasdüse auf, welche an eine Mündung eines Vorformlings angesetzt werden kann, um diesen mit einem gasförmigen Medium zu beaufschlagen und dadurch -üblicherweise gegen eine Blasform- zu expandieren. Dabei ist es möglich, dass auf einer entsprechenden Blaseinrichtung mehrere unterschiedliche Behältnisse bzw. Vorformlinge geblasen werden. Bei einer Umstellung auf einen anderen Behältnistyp ist es jedoch dabei teilweise erforderlich, die Blasdüse auszuwechseln.

Aus der DE 36 23 099 C3 ist eine Blasformmaschine bekannt. Diese Blasformmaschine weist dabei eine Hülse bzw. Düse auf, welche in das Innere eines Behältnisses einführbar ist. Ein Wechsel dieser Blasdüse wird jedoch in der DE 36 23 099 C3 nicht beschrieben.

Die DE 35 20 721 A1 beschreibt einen Blasdorn für Extrusionsblasmaschinen. Dabei ist es möglich, eine entsprechende Schneidhülse auszuwechseln, wobei die Dichtigkeit des entsprechenden Blasdorns durch einen Schneidhülsenwechsel nicht beeinträchtigt wird.

Aus der DE 36 36 566 A1 ist eine Spannvorrichtung für Blasdorne von Blasformmaschinen bekannt. Dabei ist jeder Blasdorn über einen Führungszapfen in Längsrichtung beweglich an einem an einer Führungsplatte befestigten Tragteil gehalten. Zum Wechseln des Blasdorns kann hier der gesamte Blasdorn von dem Tragteil abgeschraubt werden, was jedoch vergleichsweise aufwendig ist.

Aus der JP 2007320133 A ist eine einstellbare Blasdüse bekannt. Dabei kann eine Kontaktkraft der Düse verändert werden. Ein Ersatz der Düse selbst wird jedoch in der JP 2007 320 133 A nicht beschrieben.

Der vorliegenden Erfindung liegt die Aufgabe zugrunde, eine schnellere Anpassung von Blaseinrichtungen auf unterschiedliche Behältnistypen oder Vorformlinge zu erreichen. Dies wird erfindungsgemäß durch eine Vorrichtung nach Anspruch 1 und eine Blaseinrichtung nach Anspruch 15 erreicht. Vorteilhafte Ausführungsformen und Weiterbildungen sind Gegenstand der Unteransprüche.

Aus der US 6,238,200 B1 ist eine Größenanpassvorrichtung für Kunststoffblasmaschinen bekannt. Hier ist ein Einstellmittel vorgesehen, um wenigstens die radiale Bewegung eines Blasdorns bezüglich eines Blasdornträgers einzustellen.

Die FR 2 720 681 beschreibt eine Vorrichtung zum Herstellen von Behältnissen ausgehend von Vorformlingen.

Eine erfindungsgemäße Vorrichtung zum Umformen von Kunststoffvorformlingen zu Kunststoffbehältnissen weist eine Blaseinrichtung auf, welche die Kunststoffvorformlinge mit einem gasförmigen Medium beaufschlägt, um die Kunststoffvorformlinge zu Kunststoffbehältnissen zu expandieren. Weiterhin weist die Blaseinrichtung eine Blasdüse auf, welche an einer Mündung der Kunststoffvorformlinge anglegbar ist, um diese mit dem gasförmigen Medium zu beaufschlagen. Erfindungsgemäß weist die Blaseinrichtung einen Träger für die Blasdüse oder einen Teil der Blasdüse auf, der von dem gasförmigen Medium durchströmbar ist und die Blaseinrichtung weist einen Verbindungsmechanismus auf, um die Blasdüse oder einen Teil der Blasdüse lösbar an dem Träger anzuordnen, wobei die Blasdüse von dem Träger werkzeugfrei abnehmbar ist.

Damit wird erfindungsgemäß eine werkzeugfrei abnehmbare Blasdüse vorgeschlagen, um auf diese Weise eine Vorrichtung zum Umformen der Kunststoffvorformlinge zu Kunststoffbehältnissen schnell auf andere Behältnisgattungen oder Vorformlingsgattungen umzustellen. Hierbei ist zu berücksichtigen, dass derartige Vorrichtungen üblicherweise eine Vielzahl von derartigen Blasdüsen aufweisen, so dass durch einen entsprechend schnellen und manuellen bzw. werkzeugfreien Wechsel ein hoher Zeitgewinn erreicht wird. Dabei kann die Blasdüse mehrteilig aufgebaut sein. Bevorzugt ist jedoch der Verbindungsmechanismus derart gestaltet, dass alle Elemente der Blasdüse werkzeugfrei abnehmbar sind.

Vorzugsweise ist der Verbindungsmechanismus derart gestaltet, dass die Blasdüse durch eine Relativdrehung zwischen der Blasdüse und dem Träger abnehmbar ist. Dabei wäre es möglich, dass die Blasdüse über eine Schraubverbindung mit dem Träger verbunden ist. Bevorzugt jedoch ist die Blasdüse von dem Träger durch eine Relativdrehung zwischen Blasdüse und Träger abnehmbar, welche bevorzugt einen Winkel von weniger als 360°, bevorzugt von weniger als 180° und besonders bevorzugt von weniger als 120° umfasst.

Dabei ist bevorzugt die Blasdüse nicht allein durch diese Relativdrehung abnehmbar, sondern durch eine die sich an diese Relativdrehung anschließende lineare Bewegung beispielsweise ein Abziehen der Blasdüse von dem Träger in der Längsrichtung der Düse bzw. entlang einer Drehachse der besagten Relativdrehung. Damit ist bevorzugt die Blasdüse auch von dem Träger abziehbar, wobei hier besonders bevorzugt keine Schraubverbindung zwischen Blasdüse und Träger vorgesehen ist.

Bei einer weiteren vorteilhaften Ausführungsform ist an dem Träger ein Eingriffsabschnitt angeordnet, der in einem zusammengebauten Zustand von Träger und Blasdüse in einen Aufnahmebereich der Blasdüse eingreift. Dabei weist bevorzugt dieser Eingriffsabschnitt einen kreisförmigen Querschnitt auf und bevorzugt weist auch der Aufnahmebereich einen kreisförmigen Querschnitt auf, so dass der Eingriffsabschnitt teleskopartig in den besagten Aufnahmebereich eingeschoben werden kann. Dieser Eingriffsabschnitt und der Aufnahmebereich bilden damit bei dieser Ausführungsform den Verbindungsmechanismus zwischen dem Träger und der Blasdüse.

Bei einer weiteren vorteilhaften Ausführungsform ist an dem Träger ein gegenüber der Blasdüse radial bewegbarer Eingriffskörper angeordnet. Dieser Eingriffskörper fungiert dabei bevorzugt als Verdrehsicherung oder als Lösesicherung, um zu verhindern, dass sich die Blasdüse versehentlich von dem Träger löst. Bevorzugt ist es dabei erforderlich, den Eingriffskörper zu betätigen, um Blasdüse und Träger voneinander lösen zu können. Der Eingriffskörper ist bevorzugt auch gegenüber dem Träger bewegbar. Bei der Bewegung des Eingriffskörpers gegenüber dem Träger oder der Blasdüse kann es sich sowohl um eine rein radiale Bewegung handeln als auch um eine solche Bewegung, welche neben einer radialen Komponente noch weitere Komponenten (beispielsweise in der Längsrichtung) beinhaltet.

Bei einer weiteren vorteilhaften Ausführungsform weist der Eingriffskörper einen Eingriffsabschnitt auf, der in einem zusammengebauten Zustand von Blasdüse und Träger in einen Bereich der Blasdüse eingreift. Dieser Eingriffsabschnitt dient zur Verdrehsicherung und kann bei einer bevorzugten Ausführungsform sowohl beim Aus- als auch beim Eindrehen der Blasdüse manuell betätigt werden. Insbesondere ist jedoch ein manuelles Betätigen beim Ausdrehen vorteilhaft, wobei in einer weiteren Ausführungsform der Eingriffsabschnitt auch beim Eindrehen manuell einrasten kann.

Bei einer weiteren vorteilhaften Ausführungsform weist der Träger eine Ausnehmung auf, in der wenigstens ein Abschnitt des Eingriffskörpers in einem montierten Zustand angeordnet ist. Durch diesen Eingriff wird eine Verdrehsicherung erreicht. Auch kann der Eingriffskörper bei seiner Bewegung durch die Ausnehmung (insbesondere in der Umfangsrichtung der Blasdüse) geführt werden. Bevorzugt ist der Eingriffskörper aus einem Kunststoff oder Edelstahl gefertigt.

Bei einer weiteren vorteilhaften Ausführungsform ist ein Federungselement, bevorzugt an dem Träger, vorgesehen, welches den Eingriffskörper gegenüber dem Träger vorspannt. Durch dieses Federungselement wird erreicht, dass in einem montierten Zustand eine Verdrehsicherung zwischen Blasdüse und Träger wirkt.

Bei einer weiteren vorteilhaften Ausführungsform weist der Träger ein Rückhaltemittel auf, welches ein Herausfallen des Eingriffskörpers aus dem Träger verhindert. Die Beschaffenheit dieses Rückhaltemittels wird eingehender unter Bezugnahme auf die Figuren erläutert.

Es wird darauf hingewiesen, dass die jeweilige Ausgestaltung des beschriebenen Eingriffskörpers auch in anderer Weise erfolgen kann. Insbesondere ist es möglich, dass der Eingriffskörper umgekehrt an der Blasdüse angeordnet ist und ein Abschnitt dieses Eingriffskörpers in den Träger eingreift. Entsprechend könnten auch die Rückhaltemittel an der Blasdüse angeordnet sein und umgekehrt die Ausnehmung an dem Träger.

Bei einer weiteren vorteilhaften Ausführungsform ist der Eingriffskörper ein kugelförmiger Körper, der insbesondere in eine beispielsweise lochartige Ausnehmung eingreifen kann. Bei einer weiteren vorteilhaften Ausführungsform sind mehrere Eingriffskörper gleichmäßig um den Außenumfang des Trägers verteilt. Dabei ist es jedoch möglich, dass die Eingriffskörper in der Längsrichtung des Trägers versetzt zueinander angeordnet sind.

Es wäre jedoch auch möglich, sämtliche Eingriffskörper innerhalb eines Umfangswinkels von weniger als 180° anzuordnen, damit diese leichter gleichzeitig mit einer Hand betätigt werden können.

Bei einer weiteren vorteilhaften Ausführungsform ist der Eingriffskörper schwenkbar um eine vorgegebene Schwenkachse angeordnet. Diese Schwenkachse bzw. eine entsprechende Schwenkwelle kann dabei in den Träger oder die Blasdüse und insbesondere in den Träger integriert sein.

Bei einer weiteren vorteilhaften Ausführungsform ist an dem Träger ein sich in Umfangsrichtung des Trägers erstreckender Eingriffskörper angeordnet, dessen Außenquerschnitt an einen Innenquerschnitt einer an der Blasdüse angeordneten Eingriffsausnehmung angepasst ist. So ist es beispielsweise möglich, dass der Träger ein in einer radialen Richtung nicht kreisförmig ausgebildetes Element aufweist, welches in eine entsprechend ausgeformten Ausnehmung der Blasdüse eingreift.

Diese Anordnung wird detaillierter unter Bezugnahme auf die Figurenbeschreibung erläutert.

Bei einer weiteren vorteilhaften Ausführungsform weist die Blasdüse einen Aufnahmebereich auf, in den ein Verbindungsabschnitt des Trägers einführbar ist. Damit wird zumindest teilweise bei dieser Ausführungsform die Blasdüse auf einen Bereich des Trägers aufgeschoben. Vorzugsweise umgibt dabei dieser Aufnahmebereich den Verbindungsabschnitt in einer Umfangsrichtung (bezüglich der Längsrichtung der Blasdüse) vollständig. Der Aufnahmebereich und der Verbindungsabschnitt bilden gemeinsam den oben erwähnten Verbindungsmechanismus oder einen Teil hiervon.

Bei einer weiteren vorteilhaften Ausführungsform ist ein Dichtelement vorgesehen, welches den Träger gegenüber der Blasdüse abdichtet. Bei diesem Dichtelement kann es sich beispielsweise um einen O-Ring handeln. Es wäre jedoch auch eine Abdichtung über entsprechende Anlageflächen des Trägers und der Blasdüse möglich.

Bei einer weiteren vorteilhaften Ausführungsform handelt es sich bei der Vorrichtung um eine Streckblasmaschine. Damit weist bei dieser Ausführungsform die Vorrichtung auch eine Reckstange auf, die beispielsweise durch die Blasdüse führbar ist.

Die vorliegende Erfindung ist weiterhin auf eine Blaseinrichtung für eine Streckblasmaschine gerichtet, welche Kunststoffvorformlinge mit einem gasförmigen Medium beaufschlagt, um die Kunststoffvorformlinge zu Kunststoffbehältnissen zu expandieren, wobei die Blaseinrichtung eine Blasdüse aufweist, welche an eine Mündung der Kunststoffvorformlinge anlegbar ist, um diese mit dem gasförmigen Medium zu beaufschlagen. Erfindungsgemäß weist die Blaseinrichtung einen Träger für die Blasdüse auf, der von dem gasförmigen Medium durchströmbar ist und die Blaseinrichtung weist weiterhin einen Verbindungsmechanismus auf, um die Blasdüse lösbar an dem Träger anzuordnen, wobei die Blasdüse von dem Träger werkzeugfrei abnehmbar ist.

Dabei ist es möglich, dass eine Außenfläche dieser Blasdüse eine Strukturierung aufweist, damit sie leichter von einer Hand gegriffen und gegenüber dem Träger gedreht werden kann. Die Blasdüse selbst kann dabei in unterschiedlicher Weise gestaltet sein. So kann die Blasdüse derart gestaltet sein, dass sie in eine Mündung des Behältnisses einführbar ist, es wäre jedoch auch möglich, dass die Blasdüse an einen oberen Rand des Behältnisses anlegbar ist und diesem gegenüber abdichtet und schließlich wäre es auch möglich, dass die Blasdüse sich an einen Außenbereich der Mündung anlegt, wie beispielsweise einen Tragring oder einen Sicherungsring des Behältnisses.

Weitere Vorteile und Ausführungsformen ergeben sich aus den beigefügten Zeichnungen:
Darin zeigen:
- Fig. 1: Eine Ansicht einer Streckblasmaschine nach dem Stand der Technik;
- Fig. 2: eine Ansicht einer Blaseinrichtung;
- Fig. 3: eine Detailansicht einer erfindungsgemäßen Blaseinrichtung;
- Fig. 4: eine Schnittdarstellung der in Fig. 3 gezeigten Einrichtung entlang der Linie A-A aus Fig. 3; und
- Fig. 5: eine Explosionsansicht des in Fig. 3 gezeigten Details.

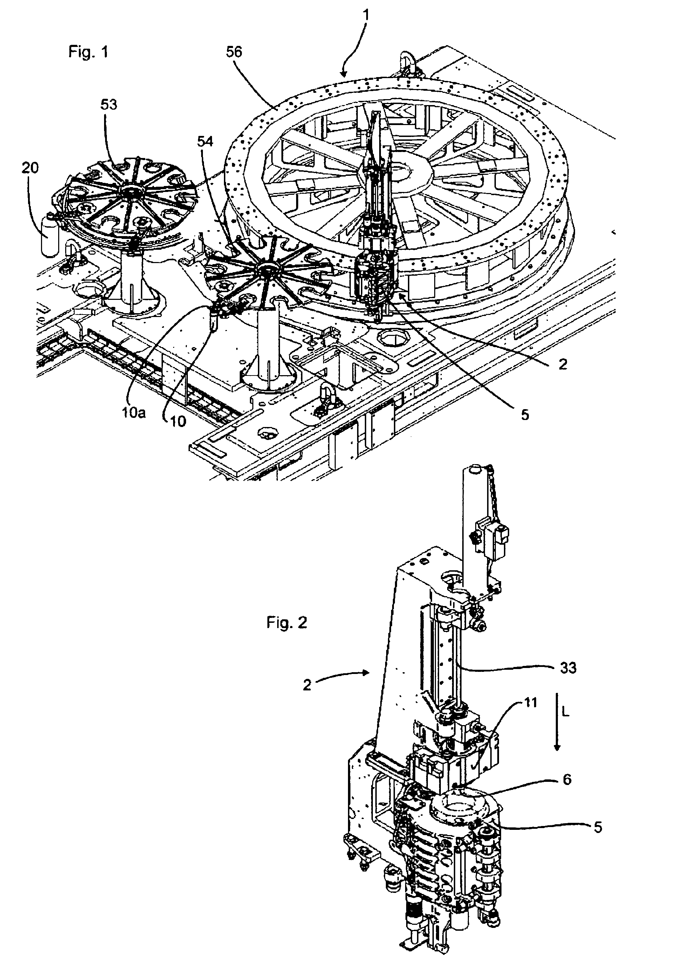

Figur 1 zeigt eine Maschine 50 zum Behandeln von Behältnissen. Dabei bezieht sich das Bezugszeichen 1 in seiner Gesamtheit auf eine Vorrichtung zum Umformen von Vorformlingen 10 zu Behältnissen 20. Genauer werden dieser Vorrichtung 1 die Vorformlinge 10 über ein erstes Sternrad 54 zugeführt und anschließend werden die Vorformlinge in der Vorrichtung 1 zu Behältnissen 20 umgeformt, wobei sie während dieses Umformvorgangs auf einem als Transporteinrichtung fungierendem Transportrad 56 transportiert werden. Die so hergestellten Behältnisse 20 werden anschließend über ein weiteres Sternrad 53 (welches nur teilweise dargestellt ist) abtransportiert. Zur Vereinfachung ist nur eine Vorrichtung 1 dargestellt.

Die Vorrichtung 1 weist dabei eine Blasform 5 auf, innerhalb derer der eigentliche Umformungsvorgang stattfindet. Daneben weist die Vorrichtung einen Stangenkörper bzw. eine Reckstange 33 auf, dessen oberes Ende an einer Halterung 11 angeordnet ist. Während des Expansionsvorgangs bewegt sich die Halterung 11 mit der Reckstange 33 nach unten und auf diese Weise findet ein Dehnvorgang der Vorformlinge 10 in deren Längsrichtung L statt (Fig. 2). Gleichzeitig wird über eine Blasdüse Luft in die Vorformlinge 10 eingefüllt, um diese zu expandieren. Das Bezugszeichen 10a bezieht sich auf eine Mündung des Vorformlings 10, über welche die Reckstange 2 in den Vorformling 10 eingeführt wird.

Fig. 2 zeigt eine Detailansicht einer erfindungsgemäßen Blaseinrichtung. Diese Blaseinrichtung weist dabei eine Blasdüse 6 auf, die während des Blasvorgangs an eine Mündung 10a des innerhalb einer Blasform 5 befindlichen Behältnisses angelegt wird. Dabei wird diese Blasdüse 6 auch in einer Längsrichtung L des Behältnisses bewegt.

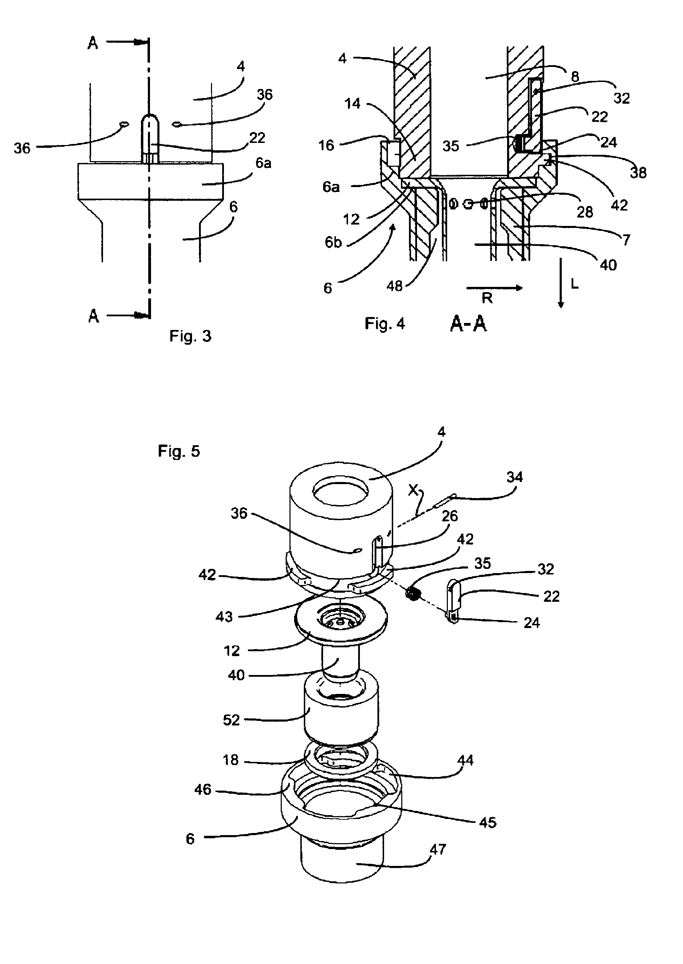

Fig. 3 zeigt eine Detailansicht einer erfindungsgemäßen Blaseinrichtung, genauer gesagt einen Träger 4, an dem eine in ihrer Gesamtheit mit 6 bezeichnete Blasdüse angeordnet ist. Dabei erkennt man, dass sich hier ein Querschnitt dieser Blasdüse 6 von unten nach oben erweitert und in einem Übergangsbereich 6a ein Abschnitt des Trägers 4 angeordnet ist. Das Bezugszeichen 22 bezieht sich auf einen Eingriffkörper, der, wie unten genauer erläutert wird, als Verdrehsicherung zwischen der Blasdüse 6 und dem Träger in einem montierten Zustand dient. Dabei kann dieser Eingriffskörper 22 manuell betätigt werden, um diese Verdrehsicherung zu lösen. Das Bezugszeichen 36 bezieht sich auf zwei Öffnungen in dem Träger 4, durch welche hindurch sich ein in Fig. 5 gezeigter Bolzen bzw. eine Welle 34 erstreckt, an der wiederum der Eingriffskörper 22 angeordnet ist.

Fig. 4 zeigt eine Schnittdarstellung der in Fig. 3 gezeigten Anordnung entlang der Linie A-A aus Fig. 3. Man erkennt dabei, dass der Träger 4 einen Verbindungsabschnitt 14 aufweist, der in den Übergangsbereich 6a bzw. in dessen Inneres bzw. einen auf diesen Verbindungsabschnitt angepassten Aufnahmebereich 16 der Blasdüse 6 eingreift. Dabei ist ebenfalls erkennbar, dass an diesem Verbindungsabschnitt 14 ein Vorsprung 42, genauer gesagt, wie in Fig. 5 gezeigt, mehrere Vorsprünge 42 angeordnet sind, welche in eine entsprechend angepasste Ausnehmung 38 des Aufnahmebereichs 6a eingreifen. In der Blasdüse 6 ist ein sich in der Längsrichtung L erstreckender Rohrkörper 40 angeordnet, der an seinem oberen Ende ein Verbindungsstück bzw. einen Flansch 12 aufweist, wobei dieses Verbindungsstück 12 wiederum an dem Träger 4 anliegen kann, um eine Abdichtung zu bewirken. Dieser Rohrkörper 40, mit dem das Verbindungsstück 12 einteilig ausgebildet ist, bildet dabei das Düsenelement, welches in die Mündung eines Behältnisses zumindest teilweise einführbar ist.

Innerhalb des Trägers 4 ist ein Kanal 8 ausgebildet, entlang dessen ein gasförmiges Medium, wie insbesondere Luft, strömen kann. In dem rohrförmigen Körper 40 sind wiederum Öffnungen 28 angeordnet, die ein teilweises Ausströmen der Luft in einen Zwischenraum 48 zwischen dem rohrförmigen Körper 40 und einer Umfangswandung 7 der Blasdüse ermöglichen. Das Verbindungsstück 12 bzw. das Düsenelement 12, 40 kann sich dabei gegenüber einer Stufe 6b der Blasdüse abstützen und auf diese Weise wird verhindert, dass das Düsenelement in Fig. 4 nach unten durchrutscht. Durch dieses Düsenelement 12, 40 bzw. dessen rohrförmigen Körper 40 hindurch kann sich auch die Reckstange bewegen. Der rohrförmige Körper 40 ist hier auch Bestandteil der Blasdüse 6.

Man erkennt weiterhin, dass der Eingriffskörper 22 um eine Welle, die durch eine Öffnung 32 geführt ist, schwenkbar angeordnet ist. Weiterhin weist dieser Eingriffskörper 22 einen Eingriffsabschnitt auf, der, wie unten genauer erläutert wird, in einem gesicherten bzw. montierten Zustand in einen Bereich der Blasdüse 6 eingreift. Eine Federungseinrichtung 35 drängt dabei diesen Eingriffskörper 22 bzw. den Abschnitt 24 des Eingriffskörpers 22 radial d.h. in Richtung R nach außen. Man erkennt weiterhin, dass der Eingriffsabschnitt 24 des Eingriffskörpers 22 auf im Wesentlichen der gleichen Höhe angeordnet ist, wie ein Vorsprung 46 (vgl. Fig. 5) der an der Blasdüse 6 angeordnet ist und radial nach innen ragt.

Fig. 5 zeigt eine Explosionsansicht einer erfindungsgemäßen Blaseinrichtung 2. Man erkennt hier wiederum, dass der Träger 4 eine Ausnehmung 26 aufweist, in der der Eingriffskörper 22 schwenkbar angeordnet ist. Diese Ausnehmung 26 erstreckt sich dabei auch in den Bereich einer oberhalb der Vorsprünge 42 gebildeten Umfangsnut 43. Das Bezugszeichen 34 bezeichnet die Welle, welche durch die Öffnungen 36 und auch durch eine Öffnung 32 des Eingriffskörpers 22 geführt wird, um diesen schwenkbar zu lagern. Damit dient diese Welle 34 auch als Rückhaltemittel, welche ein Herausfallen des Eingriffskörpers aus dem Träger 4 verhindert. Im Inneren der Blasdüse 6 ist ein Rohrstück 52 angeordnet, durch welches hindurch Blasluft treten kann. Weiterhin erlaubt dieses Rohrstück 52 auch ein Hindurchtreten einer (nicht gezeigten) Reckstange.

Das Bezugszeichen 18 bezieht sich auf ein Dichtelement, wie einen O-Ring oder Stahlring, der zum Abdichten der Düse gegenüber einem Behältnis während eines Blasvorgangs dient. Daneben könnte ein weiteres (nicht gezeigtes) Dichtelement vorgesehen sein, welches den Träger 4 gegenüber dem Düsenelement 12, 40 abdichtet.

Im zusammengebauten Zustand werden dabei das Rohrstück 52 und der Flansch bzw. das Verbindungsstück 12 aneinander gepresst um so eine Dichtwirkung zu erreichen. Der Eingriffsabschnitt 24 kann dabei in eine entsprechende Eingriffsausnehmung 45, welche an dem Vorsprung 46 angeordnet ist, eingreifen. Das Bezugszeichen 47 bezieht sich auf einen Kopf der Blasdüse 6.

Es wäre dabei möglich, dass auch an den anderen Vorsprüngen 46 entsprechende Ausnehmungen 45 angeordnet sind. Durch diesen Eingriff wird eine Verdrehsicherung erreicht. Zum Zusammenbau wird die Blasdüse 6 auf den Träger 4, genauer gesagt über den Verbindungsabschnitt 14 geschoben, wobei hier genau diese relative Drehstellung zwischen der Blasdüse 6 und dem Träger 4 zu beachten ist, so dass die beiden Elemente ineinander geführt werden können, wobei hierzu die Vorsprünge 42 durch Ausnehmungen 44 zwischen den Vorsprüngen 46 der Blasdüse hindurchtreten können.

Anschließend wird die Blasdüse 6 gegenüber dem Träger 4 gedreht, so dass durch ein Zusammenwirken der Vorsprünge 42 und der Vorsprünge 46 ein Halt der Blasdüse 6 an dem Träger 4 in Längsrichtung erreicht wird. Dabei wäre es auch möglich, dass beispielsweise die Vorsprünge 43 in Längsrichtung L leicht schräg stehen, so dass durch eine Drehung der Blasdüse 6 gegenüber dem Träger 4 auch die Blasdüse 6 geringfügig in der Längsrichtung L an den Träger 4 herangedrückt wird, um auf diese Weise die Dichtwirkung zu erhöhen.

## Patentansprüche

1. Vorrichtung (1) zum Umformen von Kunststoffvorvormlingen (10) zu Kunststoffbehältnissen (20) mit einer Blaseinrichtung (2), welche die Kunststoffvorformlinge (10) mit einem gasförmigen Medium beaufschlagt, um die Kunststoffvorformlinge (10) zu Kunststoffbehältnissen (20) zu expandieren, wobei die Blaseinrichtung (2) eine Blasdüse (6) aufweist, welche an eine Mündung (10a) der Kunststoffvorformlinge (10) anlegbar ist, um diese mit dem gasförmigen Medium zu beaufschlagen,
**dadurch gekennzeichnet, dass**
die Blaseinrichtung (2) einen Träger (4) für die Blasdüse (6) aufweist, der von dem gasförmigen Medium durchströmbar ist, und die Blaseinrichtung (2) einen Verbindungsmechanismus aufweist, um die Blasdüse (6) lösbar an dem Träger anzuordnen, wobei die Blasdüse (6) von dem Träger (4) werkzeugfrei abnehmbar ist.

2. Vorrichtung (1) nach Anspruch 1
**dadurch gekennzeichnet, dass**
der Verbindungsmechanismus derart gestaltet ist, dass die Blasdüse (6) durch eine Relativdrehung zwischen der Blasdüse (6) und dem Träger (4) abnehmbar ist.

3. Vorrichtung (1) nach Anspruch 2,
**dadurch gekennzeichnet, dass**
die Blasdüse (6) von dem Träger (4) durch eine Relativdrehung zwischen der Blasdüse (6) und dem Träger (4) lösbar ist, welche einen Drehwinkel von weniger als 360°, bevorzugt von weniger als 180° und besonders bevorzugt von weniger als 120° umfasst.

4. Vorrichtung (1) nach wenigstens einem der vorangegangenen Ansprüche,
**dadurch gekennzeichnet, dass**
das die Blasdüse (6) von dem Träger (4) abziehbar ist.

5. Vorrichtung (1) nach wenigstens einem der vorangegangenen Ansprüche,
**dadurch gekennzeichnet, dass**
an dem Träger (4) ein Eingriffsabschnitt (14) angeordnet ist, der in einem zusammengebauten Zustand von Träger (4) und Blasdüse (6) in einen Aufnahmebereich (16) der Blasdüse (6) eingreift.

6. Vorrichtung (1) nach wenigstens einem der vorangegangenen Ansprüche,
**dadurch gekennzeichnet, dass**
an dem Träger (4) ein radial gegenüber der Blasdüse (6) bewegbarer Eingriffskörper (22) angeordnet ist.

7. Vorrichtung (1) nach Anspruch 6,
**dadurch gekennzeichnet, dass**
der Eingriffskörper (22) einen Eingriffsabschnitt (24) aufweist, der in einem zusammengebauten Zustand der Blasdüse (6) und des Trägers (4) in einen Bereich (45) der Blasdüse (6) eingreift.

8. Vorrichtung (1) nach wenigstens einem der vorangegangenen Ansprüche 5 - 6,
**dadurch gekennzeichnet, dass** der Träger (4) eine Ausnehmung (26) aufweist, in der wenigstens ein Abschnitt des Eingriffskörpers (22) angeordnet ist.

9. Vorrichtung (1) nach wenigstens einem der vorangegangenen Ansprüche 5 - 8,
**dadurch gekennzeichnet, dass**
ein Federungselement (35) vorgesehen ist, welches den Eingriffskörper (22) gegenüber dem Träger (4) vorspannt.

10. Vorrichtung (1) nach wenigstens einem der vorangegangenen Ansprüche 5 - 8,
**dadurch gekennzeichnet, dass**
der Träger (4) ein Rückhaltemittel (34) aufweist, welches ein Herausfallen des Eingriffskörpers (22) aus dem Träger (4) verhindert.

11. Vorrichtung (1) nach wenigstens einem der vorangegangenen Ansprüche 5 - 11,
**dadurch gekennzeichnet, dass**
der Eingriffskörper (22) schwenkbar um eine vorgegebene Schwenkachse (X) angeordnet ist.

12. Vorrichtung (1) nach wenigstens einem der vorangegangenen Ansprüche,
**dadurch gekennzeichnet, dass**
an dem Träger (4) mindestens ein Eingriffskörper (42) angeordnet ist, dessen Aussenquerschnitt an einen Innenquerschnitt wenigstens einer an der Blasdüse (6) angeordneten Eingriffsausnehmung (44) angepasst ist.

13. Vorrichtung (1) nach wenigstens einem der vorangegangenen Ansprüche,
**dadurch gekennzeichnet, dass**
ein Dichtelement vorgesehen ist, welches den Träger (4) gegenüber der Blasdüse (6) abdichtet,

14. Vorrichtung (1) nach wenigstens einem der vorangegangenen Ansprüche,
**dadurch gekennzeichnet, dass**
die Vorrichtung (1) eine Streckblasmaschine (1) ist.

15. Blaseinrichtung (2) für eine Streckblasmaschine welche Kunststoffvorformlinge (10) mit einem gasfrömigen Medium beaufschlagt, um die Kunststoffvorformlinge (10) zu Kunststoffbehältnissen (20) zu expandieren, wobei die Blaseinrichtung (2) eine Blasdüse (6) aufweist, welche an eine Mündung der Kunststoffvorformlinge (10) anlegbar ist, um diese mit dem gasförmigen Medium zu beaufschlagen,
**dadurch gekennzeichnet, dass**
die Blaseinrichtung (2) einen Träger (4) für die Blasdüse (6) aufweist, der von dem gasförmigen Medium durchströmbar ist, und die Blaseinrichtung (2) einen Verbindungsmechanismus aufweist, um die Blasdüse (6) lösbar an dem Träger anzuordnen, wobei die Blasdüse (6) von dem Träger (4) werkzeugfrei abnehmbar ist.

## Claims

1. An apparatus (1) for shaping plastics material pre-forms (10) into plastics material containers (20) with a blowing device (2) which acts upon the plastics material pre-forms (10) with a gaseous medium in order to expand the plastics material pre-forms (10) to form plastics material containers (20), wherein the blowing device (2) has a blowing nozzle (6) which is capable of being applied to an aperture (10a) of the plastics material pre-forms (10) in order to act upon them with the gaseous medium, **characterized in that** the blowing device (2) has a support (4) for the blowing nozzle (6), through which the gaseous medium is capable of flowing, and the blowing device (2) has a connecting mechanism in order to arrange the blowing nozzle (6) on the support in a detachable manner, wherein the blowing nozzle (6) is capable of being removed from the support (4) without any tools.

2. An apparatus (1) according to claim 1, **characterized in that** the connecting mechanism is designed in such a way that the blowing nozzle (6) is capable of being removed by a relative rotation between the blowing nozzle (6) and the support (4).

3. An apparatus (1) according to claim 2, **characterized in that** the blowing nozzle (6) is capable of being detached from the support (4) by a relative movement between the blowing nozzle (6) and the support (4), this movement preferably encompassing an angle of rotation of less than 360°, preferably less than 180°, and in a particularly preferred manner less than 120°.

4. An apparatus (1) according to at least one of the preceding claims, **characterized in that** the blowing nozzle (6) is capable of being withdrawn from the support (4).

5. An apparatus (1) according to at least one of the preceding claims, **characterized in that** an engagement portion (14), which in an assembled state of the support (4) and the blowing nozzle (6) engages in a receiving area (16) of the blowing nozzle (6), is arranged on the support (4).

6. An apparatus (1) according to at least one of the preceding claims, **characterized in that** an engagement member (22) capable of being moved radially with respect to the blowing nozzle (6) is arranged on the support (4).

7. An apparatus (1) according to claim 6, **characterized in that** the engagement member (22) has an engagement portion (24) which engages in an area (45) of the blowing nozzle (6) in an assembled state of the blowing nozzle (6) and the support (4).

8. An apparatus (1) according to at least one of the preceding claims 5 to 6, **characterized in that** the support (4) has a recess (26) in which at least one portion of the engagement member (22) is arranged.

9. An apparatus (1) according to at least one of the preceding claims 5 to 8, **characterized in that** a spring element (35) is provided, which pre-stresses the engagement member (22) with respect to the support (4).

10. An apparatus (1) according to at least one of the preceding claims 5 to 8, **characterized in that** the support (4) has a retaining means (34) which prevents the engagement member (22) from falling out of the support (4).

11. An apparatus (1) according to at least one of the preceding claims 5 to 11, **characterized in that** the engagement member (22) is arranged so as to be pivotable about a pre-set pivot axis (X).

12. An apparatus (1) according to at least one of the preceding claims, **characterized in that** at least one engagement member (42), the external cross-section of which is adapted to an internal cross-section of at least one engagement recess (44) arranged on the blowing nozzle (6), is arranged on the support (4).

13. An apparatus (1) according to at least one of the preceding claims, **characterized in that** a sealing element is provided which seals off the support (4) with respect to the blowing nozzle (6).

14. An apparatus (1) according to at least one of the preceding claims, **characterized in that** the apparatus (1) is a stretch blow moulding machine (1).

15. A blowing device (2) for a stretch blow moulding machine, which acts upon plastics material pre-forms (10) with a gaseous medium in order to expand the plastics material pre-forms (10) into plastics material containers (20), wherein the blowing device (2) has a blowing nozzle (6) which is capable of being applied to an aperture of the plastics material pre-forms (10) in order to act upon them with the gaseous medium, **characterized in that** the blowing device (2) has a support (4) for the blowing nozzle (6), which support (4) is capable of having the gaseous medium flow through it, and the blowing device (2) has a connecting mechanism in order to arrange the blowing nozzle (6) on the support in a detachable manner, wherein the blowing nozzle (6) is capable of being removed from the support (4) without any tools.

## Revendications

1. Installation (1) pour la transformation de préformes en matière plastique (10) en récipients en matière plastique (20) avec un dispositif de soufflage (2), lequel soumet les préformes en matière plastique (10) à un fluide gazeux pour dilater les préformes en matière plastique (10) de manière à former des récipients en matière plastique (20), le dispositif de soufflage (2) comportant une buse de soufflage (6) applicable contre une embouchure (10a) des préformes en matière plastique (10) pour soumettre celles-ci au fluide gazeux,
**caractérisée en ce que**
le dispositif de soufflage (2) présente un support (4) pour la buse de soufflage (6), au travers duquel peut s'écouler le fluide gazeux, et **en ce que** le dispositif de soufflage (2) comporte un mécanisme de connexion, pour disposer de manière amovible la buse de soufflage (6) contre le support, la buse de soufflage (6) pouvant être retirée sans outil du support (4).

2. Installation (1) selon la revendication 1, **caractérisée en ce que**
le mécanisme de connexion est prévu pour que la buse de soufflage (6) puisse être retirée par une rotation relative de la buse de soufflage (6) par rapport au support (4).

3. Installation (1) selon la revendication 2, **caractérisée en ce que**
la buse de soufflage (6) est détachable du support (4) par une rotation relative de la buse de soufflage (6) par rapport au support (4), laquelle correspond à un angle de rotation inférieur à 360°, avantageusement inférieur à 180° et préférentiellement inférieur à 120°.

4. Installation (1) selon au moins une des revendications précédentes, **caractérisée en ce que**
la buse de soufflage (6) peut être tirée du support (4).

5. Installation (1) selon au moins une des revendications précédentes, **caractérisée en ce que**
une partie d'engagement (14) est disposée sur le support (4), laquelle s'engage dans une zone de réception (16) de la buse de soufflage (6) en état d'assemblage du support (4) et de la buse de soufflage (6).

6. Installation (1) selon au moins une des revendications précédentes, **caractérisée en ce que**
un corps d'engagement (22) mobile radialement par rapport à la buse de soufflage (6) est disposé sur le support (4).

7. Installation (1) selon la revendication 6, **caractérisée en ce que**
le corps d'engagement (22) présente une partie d'engagement (24) qui s'engage dans une zone (45) de la buse de soufflage (6) en état d'assemblage de la buse de soufflage (6) et du support (4).

8. Installation (1) selon au moins une des revendications 5 et 6, **caractérisée en ce que**
le support (4) présente un évidement (26) où est disposée au moins une partie du corps d'engagement (22).

9. Installation (1) selon au moins une des revendications 5 à 8, **caractérisée en ce que**
un élément à ressort (35) est prévu, lequel pré-contraint le corps d'engagement (22) par rapport au support (4).

10. Installation (1) selon au moins une des revendications 5 à 8, **caractérisée en ce que**
le support (4) comporte un moyen de retenue (34) empêchant une chute du corps d'engagement (22) hors du support (4).

11. Installation (1) selon au moins une des revendications 5 à 11, **caractérisée en ce que**
le corps d'engagement (22) est disposé de manière à pouvoir pivoter autour d'un axe de pivotement (X) défini.

12. Installation (1) selon au moins une des revendications précédentes, **caractérisée en ce que**
au moins un corps d'engagement (42) est disposé sur le support (4), dont la section transversale extérieure est ajustée à une section transversale intérieure d'au moins un évidement d'engagement (44) disposé sur la buse de soufflage (6).

13. Installation (1) selon au moins une des revendications précédentes, **caractérisée en ce que**
un élément de joint est prévu, lequel rend étanche le support (4) par rapport à la buse de soufflage (6).

14. Installation (1) selon au moins une des revendications précédentes, **caractérisée en ce que**
ladite installation (1) est une machine d'étirage-soufflage (1).

15. Dispositif de soufflage (2) pour une machine d'étirage-soufflage soumettant des préformes en matière plastique (10) à un fluide gazeux pour dilater les préformes en matière plastique (10) de manière à former des récipients en matière plastique (20), le dispositif de soufflage (2) comportant une buse de soufflage (6) applicable contre une embouchure des préformes en matière plastique (10) pour soumettre celles-ci au fluide gazeux,
**caractérisé en ce que**
ledit dispositif de soufflage (2) présente un support (4) pour la buse de soufflage (6), au travers duquel peut s'écouler le fluide gazeux, et **en ce que** le dispositif de soufflage (2) comporte un mécanisme de connexion, pour disposer de manière amovible la buse de soufflage (6) contre le support, la buse de soufflage (6) pouvant être retirée sans outil du support (4).
